# EUROPÄISCHE PATENTANMELDUNG

(11) **EP 4 825 656 A1**
(43) Veröffentlichungstag der Anmeldung: **21.10.2026**
(21) Anmeldenummer: 25171520.7
(22) Anmeldetag: 20.04.2025
(51) Int. Cl.: B60N 2/28

(54) **FAHRZEUGRÜCKHALTEVORRICHTUNG, WIE KLEINKINDERSITZ ODER BABYSCHALE, ZUR VERWENDUNG IN EINEM FAHRZEUG FÜR EIN KIND SOWIE FAHRZEUG**

(71) Anmelder: Mates, Andrada, 73441 Bopfingen (DE)
(72) Erfinder: Mates, Andrada, 73441 Bopfingen (DE)
(74) Vertreter: Dalek, Arkadius Jan

(57) **Zusammenfassung**

Die Erfindung betrifft eine Fahrzeugrückhaltevorrichtung, wie ein Kleinkindersitz oder eine Babyschale zur Verwendung in einem Fahrzeug für ein Kind, insbesondere ein Kleinkind oder einen Säugling, wobei das Kind mittels einer körpernah getragenen Rückhaltebekleidung lösbar mit der Fahrzeugrückhaltevorrichtung fixierbar ist, wobei die Rückhaltebekleidung vom Kind tragbar ausgebildet ist, sich um zumindest einen Teil des Körpers des Kindes legt und nach dem Anlegen flächig an diesem anliegt, wobei die Rückhaltebekleidung mit mehreren, mindestens fünf, bevorzugt sechs, insbesondere mehr als sechs, bevorzugt acht Fixierungspunkten mit der Fahrzeugrückhaltevorrichtung lösbar verbindbar ist, wobei die Rückhaltebekleidung insbesondere in Form eines Ganzkörperanzugs, wie eines Stramplers, oder einer Weste, ausgebildet ist. Ferner betrifft die Erfindung ein Fahrzeug, umfassend eine Fahrzeugrückhaltevorrichtung.

## Beschreibung

Die Erfindung betrifft eine Fahrzeugrückhaltevorrichtung, wie einen Kleinkindersitz oder eine Babyschale, zur Verwendung in einem Fahrzeug für ein Kind, insbesondere ein Kleinkind oder einen Säugling sowie ein Fahrzeug umfassend eine derartige Fahrzeugrückhaltevorrichtung, im Einzelnen gemäß den Merkmalen der unabhängigen Ansprüche.

Aus dem Stand der Technik sind verschiedene Kinderrückhaltesysteme bekannt, bei denen das Kind über herkömmliche Gurtsysteme, meist in Fünfpunkt-Ausführung, mit der Fahrzeugrückhaltevorrichtung verbunden ist. Diese Systeme sind zwar sicher, jedoch oft umständlich in der Anwendung, wenig anpassbar und nicht in der Lage, auf Veränderungen des Zustands des Kindes oder auf äußere Einflüsse wie Fahrzeugbewegungen oder Umgebungstemperaturen dynamisch zu reagieren. Zudem bieten viele bekannte Systeme keine komfortable Möglichkeit zur Positionierung oder Anpassung der Sitzhaltung des Kindes.

Ein wesentliches Defizit herkömmlicher Systeme liegt in der mangelnden Integration moderner Technologien zur Überwachung und Anpassung der Sitzbedingungen. Insbesondere fehlt es an Systemen, die biometrische Daten erfassen, sich automatisch an die Körperform des Kindes anpassen oder äußere Kräfte wie bei abrupten Fahrzeugbewegungen dynamisch kompensieren. Die manuelle Bedienung und die starren Rückhaltesysteme führen zudem zu erhöhtem Aufwand und potenziell eingeschränktem Komfort.

Ausgehend von diesen Nachteilen soll Aufgabe der vorliegenden Erfindung sein, eine Fahrzeugrückhaltevorrichtung und ein Fahrzeug umfassend eine solche Fahrzeugrückhaltevorrichtung bereitzustellen, welche durch verbesserte Sicherheit, Komfort und Benutzerfreundlichkeit hervorstechen, eine dynamische Anpassung an Fahrzeugbewegungen und Vitaldaten des Kindes erlauben und dabei eine nachhaltige und modulare Bauweise bieten.

Diese Aufgabe wird durch die erfindungsgemäße Fahrzeugrückhaltevorrichtung sowie ein Fahrzeug umfassend eine derartige Fahrzeugrückhaltevorrichtung gemäß den unabhängigen Ansprüchen gelöst. Die abhängigen Ansprüche stellen besonders bevorzugte Ausführungsformen der Erfindung dar.

Bei einem erfindungsgemäßen Kleinkindersitz oder eine Babyschale zur Verwendung in einem Fahrzeug für ein Kind, insbesondere ein Kleinkind oder einen Säugling, ist das Kind mittels einer körpernah getragenen Rückhaltebekleidung lösbar mit der Fahrzeugrückhaltevorrichtung fixierbar, wobei die Rückhaltebekleidung vom Kind tragbar - am Körper des Kindes und trennbar von der Fahrzeugrückhaltevorrichtung - ausgebildet ist, sich um zumindest einen Teil des Körpers des Kindes legt und nach dem Anlegen flächig an diesem anliegt, wobei die Rückhaltebekleidung mit mehreren, mindestens fünf, bevorzugt sechs, insbesondere mehr als sechs, bevorzugt acht Fixierungspunkten mit der Fahrzeugrückhaltevorrichtung lösbar verbindbar ist, wobei die Rückhaltebekleidung insbesondere in Form eines Ganzkörperanzugs, wie eines Stramplers, oder einer Weste, ausgebildet ist. Dies ermöglicht eine komfortable und sichere Fixierung ohne klassische Gurtführung, in denen sich das Kind verheddern kann.

Vorteilhaft umfasst die Fahrzeugrückhaltevorrichtung eine erste Gehäusekomponente, welche als äußerer Teil der Fahrzeugrückhaltevorrichtung ausgestaltet ist, und eine zweite Gehäusekomponente, welche als innerer Teil der Fahrzeugrückhaltevorrichtung ausgestaltet ist und zur Aufnahme des Kindes dient. Dies erleichtert die modulare Konstruktion und erhöht die Flexibilität bei der Herstellung und Wartung.

Bevorzugt umfasst die Rückhaltebekleidung eine lösbare Verbindung mit der inneren oder äußeren Gehäusekomponente, sodass die Rückhaltebekleidung vom oder dem Kind getrennt an- oder ausziehbar ist und bevorzugt beim Verlassen der Fahrzeugrückhaltevorrichtung am Körper des Kindes verbleibt. Dadurch wird ein unkompliziertes Handling ermöglicht.

Nach einer besonderen Ausführungsform weist die Rückhaltebekleidung Rückhalteelemente auf, die bevorzugt starr oder halbstarr ausgebildet sind und entweder nur einen Teilbereich des Körpers, bevorzugt den Rumpf, einen Teil des Rumpfes oder den gesamten Rumpf samt äußerer Gliedmaßen des Kindes teilweise oder vollständig umfassen. Dies führt zu einer verbesserten Schutzwirkung.

Vorteilhaft umfasst die Fahrzeugrückhaltevorrichtung Fixierungspunkte, die mit einem intelligenten Auto-Tightening-System verbunden sind, das mittels wenigstens eines dem jeweiligen Fixierungspunkt zugeordneten Aktuators eine automatische Rückhaltekrafteinstellung durchführt, wobei das Auto-Tightening-System den Druck gleichmäßig über die Fixierungspunkte verteilt. Dies erhöht den Komfort und die Sicherheit durch gleichmäßige Druckverteilung.

Bevorzugt ist die Rückhaltebekleidung mit Schnellverschlüssen versehen, die eine lösbare Verbindung mit der zweiten Gehäusekomponente und insbesondere mit den Fixierungspunkten der Fahrzeugrückhaltevorrichtung ermöglichen, wobei die Schnellverschlüsse als Clips oder Schnallen ausgeführt sein können und mechanisch rastend oder magnetisch ausgebildet sein können. Dadurch wird eine einfache Handhabung beim "An- und Abschnallen" des Kindes ermöglicht.

Nach einer besonderen Ausführungsform weist die zweite Gehäusekomponente ein elastisch verformbares Element auf, das mit einem Gas, insbesondere Luft, füll- und entleerbar ist und dazu dient, das Kind darauf, insbesondere luftgestützt aufzunehmen, wobei das elastisch verformbare Element bevorzugt als mehrschichtiges oder mehrteiliges Luftkissen mit insbesondere thermoplastischen Polyurethan (TPU)-Blasen ausgebildet ist, wobei die einzelnen Luftkissen an die Körperform des Kindes durch mehr oder minderes Befüllen mit Gas anpassbar sind, und wobei eine Pumpe vorgesehen ist, die bevorzugt in der ersten Gehäusekomponente, also im äußeren Teil der Fahrzeugrückhaltevorrichtung, untergebracht ist, um den Füllungsgrad der einzelnen Luftkissen einzustellen, wobei jedem einzelnen Luftkissen bevorzugt ein Ablassventil zur kontrollierten Entlüftung zugeordnet ist, wobei bevorzugt die Fixierungspunkte zwischen einander benachbart angeordneten Luftkissen angeordnet sind. Dies sorgt für optimalen Sitzkomfort und adaptive Anpassbarkeit.

Bevorzugt sind die Luftkissen derart angeordnet, dass sie den Rumpf und/oder die Außenkontur des Kindes stützen, wobei der Füllungsgrad der einzelnen Luftkissen derart einstellbar ist, dass hierdurch eine Sitzposition durch selektives Aufpumpen der unterhalb des Rückens des Kindes angeordneten Luftkissen und eine Liegeposition durch gleichmäßiges Auf- oder Abpumpen aller Luftkissen, also durch für jedes Luftkissen getrenntes Einstellen des Füllungsgrads realisierbar ist. Dadurch wird eine ergonomische Positionierung des Kindes ermöglicht, sodass der Körper, insbesondere der Rumpf, wie der Rücken in einem Winkel zwischen 0° und 90° in Bezug auf eine Horizontale auf den Luftkissen zum Liegen (0°)/Sitzen (90°) kommt.

Vorteilhaft ist zwischen der ersten und der zweiten Gehäusekomponente wenigstens ein gyroskopischer Stabilisator angeordnet, welcher Bewegungen des Fahrzeugs detektiert und/oder ausgleicht, wobei der gyroskopische Stabilisator derart eingerichtet ist, dass insbesondere eine abrupte Verzögerungs- oder Beschleunigungsbewegung des Fahrzeugs durch eine diese kompensierende Relativbewegung zwischen der ersten und der zweiten Gehäusekomponente erfolgt, wobei dem gyroskopischen Stabilisator bevorzugt ein Verriegelungsmechanismus zugeordnet ist, welcher bei Systemausfall, insbesondere einer Unterbrechung der Stromzufuhr zum gyroskopischen Stabilisator, eine Fixierung der Fahrzeugrückhaltevorrichtung in einer Position ermöglicht, in der die erste und die zweite Gehäusekomponente unter Umgehung des gyroskopischen Stabilisators starr miteinander koppelbar sind. Grundsätzlich wäre es denkbar, dass auch mehrere gyroskopische Stabilisatoren vorgesehen sein könnten. Dies verbessert die Sicherheit bei abrupten Fahrbewegungen und bei Systemausfällen.

Nach einer besonderen Ausführungsform ist die Fahrzeugrückhaltevorrichtung lösbar an einer Basis befestigbar, wobei der Basis und/oder der Fahrzeugrückhaltevorrichtung eine Drehvorrichtung zugeordnet ist, die derart eingerichtet ist, dass sich die Fahrzeugrückhaltevorrichtung um die Basis herum um 360 Grad - in Bezug auf eine im Wesentlichen Vertikale auf die Basis gesehen - drehen lässt, wobei bevorzugt die Drehvorrichtung mit einem mehrstufigem Verriegelungssystem ausgebildet ist, das eine Fixierung der Fahrzeugrückhaltevorrichtung in verschiedenen Positionen ermöglicht wird, wobei bevorzugt die Basis eine Aufnahme für eine Isofix-Verankerung in dem Fahrzeug und ein Stützbein zum Abstützen der Basis im Fußraum des Fahrzeugs umfasst. Dies erleichtert das Einsetzen und Herausnehmen des Kindes erheblich, da die Fahrzeugrückhaltevorrichtung dann einfach in Richtung der Tür des Fahrzeugs verschwenkt werden kann. Ist dies geschehen, so kann die Fahrzeugrückhaltevorrichtung wiederum so verschwenkt werden, dass das Kind in oder entgegen der Fahrtrichtung schaut.

Vorteilhaft sind Sensoren vorgesehen, welche mindestens einen der folgenden Vital- oder Bewegungsparameter des Kindes erfassen: Herzfrequenz, Temperatur, Muskelaktivität und Körperpositionierung, wobei die Sensoren bevorzugt in oder auf den Luftkissen ein- oder aufgebracht sind und bevorzugt Teil eines Kl-gestützten Auswertungssystems sind, das unsichere Körperhaltungen, abnorme Vitalfunktionen sowie plötzliche Bewegungen oder Stresszustände erkennt und entsprechende Warnmeldungen generiert, wobei die Sensoren bevorzugt in oder an der Rückhaltebekleidung angeordnet sind. Alternativ oder zusätzlich könnten diese auch in oder an den Luftkissen angebracht sein. Dies erhöht die Reaktionsfähigkeit und Sicherheit für das Kind.

Nach einer besonderen Ausführungsform ist eine digitale Anzeige- und Steuerungsschnittstelle vorgesehen, welche Touchscreen- und Sprachsteuerung kombiniert und (z.B. mittels einer mobilen Applikation) mit einem Smartphone oder Infotainmentsystem des Fahrzeugs gekoppelt werden kann, wobei bevorzugt mittels der digitalen Anzeige- und Steuerungsschnittstelle oder einer mit dieser koppelbaren mobilen Applikation benutzerdefinierte Einstellungen vorgenommen, Nutzungsdaten verfolgt und mehrere Benutzerprofile (z.B. für mehrere Kinder) mit adaptiven Voreinstellungen verwaltet werden können. Dies ermöglicht eine individuelle und benutzerfreundliche Bedienung.

Vorteilhaft ist eine Klimaeinheit vorgesehen, welche ein Gebläse und eine Kühl- und/oder Wärmeinheit, wie eine Wärmepumpe umfasst, um die durch die Fahrzeugrückhaltevorrichtung strömende Luft gezielt zu konditionieren, insbesondere zu kühlen oder zu erwärmen, wobei bevorzugt die Luftkissen derart mit Abstand zueinander angeordnet sind, sodass die Zwischenräume zwischen den einander benachbarten Luftkissen als Ausströmkanäle der Klimaeinheit dienen, durch welche die konditionierte Luft ausströmen kann, wobei bevorzugt die Klimaeinheit zusätzlich Phasenwechselmaterialien (PCM) zur passiven Temperaturregelung sowie mindestens einen Infrarot-Temperatursensor zur Überwachung und Regelung der Temperatur umfasst. Dadurch wird ein konstantes Wohlfühlklima für das Kind geschaffen.

Nach einer besonderen Ausführungsform ist eine zentrale Steuereinheit vorgesehen, die mit folgenden erfindungsgemäßen Elementen verbunden oder verbindbar ist:
a) der digitalen Anzeige- und Steuerungsschnittstelle,
b) dem Kl-gestützten Auswertungssystem,
c) einem RFID-basierten oder biometrischen Zugangssystem zur Autorisierung der Nutzung,
d) den dem jeweiligen Fixierungspunkt zugeordneten Aktuatoren des Auto-Tightening-Systems,
e) dem gyroskopischen Stabilisator,
f) der in der ersten Gehäusekomponente untergebrachten Pumpe,
g) der Klimaeinheit,
wobei bevorzugt alle genannten Elemente, insbesondere samt der zentralen Steuereinheit in der ersten Gehäusekomponente, also im äußeren Teil der Fahrzeugrückhaltevorrichtung, untergebracht sind oder dort angeordnet sein können. Dies führt zu einer zentralisierten, effizienten Systemsteuerung.

Grundsätzlich könnten die erste als auch die zweite Gehäusekomponente als mitwachsende Komponenten ausgebildet sein, welche zur Anpassung an unterschiedliche Alters- und Größenstufen des Kindes ausgelegt sind, wobei die erste Gehäusekomponente mehrere Strukturteile umfasst, die zueinander verschieblich oder in unterschiedlichen Positionen fixierbar sind, und/oder austauschbare Rahmenelemente aufweist, und wobei die zweite Gehäusekomponente mehrere Strukturteile umfasst, die zueinander verschieblich oder in unterschiedlichen Positionen fixierbar sind, und/oder modular aufgebaute Einlegepolster vorgesehen sind, und/oder Luftkissen mit segmentweise ansteuerbarer Füllung zur geometrischen Anpassung an die Körpergröße des Kindes vorgesehen sind, und/oder die Rückhaltebekleidung in mehreren Segmenten ausgeführt ist, die je nach Altersstufe erweiterbar oder austauschbar sind, insbesondere zur Verwendung in den Altersstufen 0 bis 6 Monate, 6 Monate bis 1 Jahr, 1 bis 3 Jahre und 3 bis 6 Jahre.

Ein modular aufgebautes Rückhaltesystem für Kinder bietet zahlreiche Vorteile, die sowohl die Sicherheit als auch die Alltagstauglichkeit deutlich verbessern. Dank der Anpassbarkeit an verschiedene Alters- und Größenstufen - von der Geburt bis etwa zum sechsten Lebensjahr - entfällt der häufige Wechsel der Rückhaltevorrichtung. Dadurch verlängert sich nicht nur die Lebensdauer des Produkts erheblich, sondern es werden auch Kosten und Ressourcen eingespart. Eltern oder Betreuungseinrichtungen müssen keine mehreren altersabhängigen Sitze anschaffen, was sowohl den finanziellen Aufwand als auch den Materialverbrauch über den gesamten Lebenszyklus hinweg reduziert.

Die Möglichkeit zur individuellen Anpassung an das jeweilige Kind sorgt zudem für eine optimale Kombination aus Komfort und Sicherheit. Modulare oder verstellbare Komponenten ermöglichen eine passgenaue Einstellung, die sich den jeweiligen körperlichen Gegebenheiten anpasst. Insbesondere bei wachsenden Kindern ist dies entscheidend, da sich mit den Körperproportionen auch der Körperschwerpunkt verändert. Die mitwachsende Gestaltung der Gehäusekomponenten und der Rückhaltebekleidung gewährleistet eine gleichmäßige Verteilung der Rückhaltekraft über die relevanten Fixierungspunkte - und damit ein konstant hohes Sicherheitsniveau.

Darüber hinaus unterstützt das System die ergonomisch korrekte Haltung des Kindes in jeder Entwicklungsphase - angefangen bei der liegenden Position für Neugeborene bis hin zur aufrechten Sitzhaltung für Kleinkinder. Der Umbauprozess selbst ist durch verschiebbare und erweiterbare Elemente besonders benutzerfreundlich gestaltet: Er kann werkzeuglos und mit wenigen Handgriffen durchgeführt werden, was den Einsatz im Alltag erheblich erleichtert. Schließlich ermöglicht die modulare Bauweise auch eine harmonische Integration zusätzlicher Funktionen wie Sensorik, Klimatisierung oder Airbagsysteme, die über die gesamte Nutzungsdauer hinweg flexibel ergänzt und skaliert werden können.

Ferner betrifft die Erfindung ein Fahrzeug, wie Kraftfahrzeug, Luftfahrzeug, schienen- oder nicht-schienengebundenes Landfahrzeug, umfassend eine erfindungsgemäße Fahrzeugrückhaltevorrichtung.

Die Vorteile der Erfindung sollen nun anhand eines bevorzugten Ausführungsbeispiels und der Figuren näher dargestellt werden. Es zeigen:
Fig. 1 eine schematische Darstellung einer Fahrzeugrückhaltevorrichtung gemäß einer Ausführungsform in einer Seitenansicht;
Fig. 2 eine Vorderansicht derselben Fahrzeugrückhaltevorrichtung ohne Kind;
Fig. 3 eine Vorderansicht der Fahrzeugrückhaltevorrichtung mit einem darin befindlichen Kind in Teildarstellung.

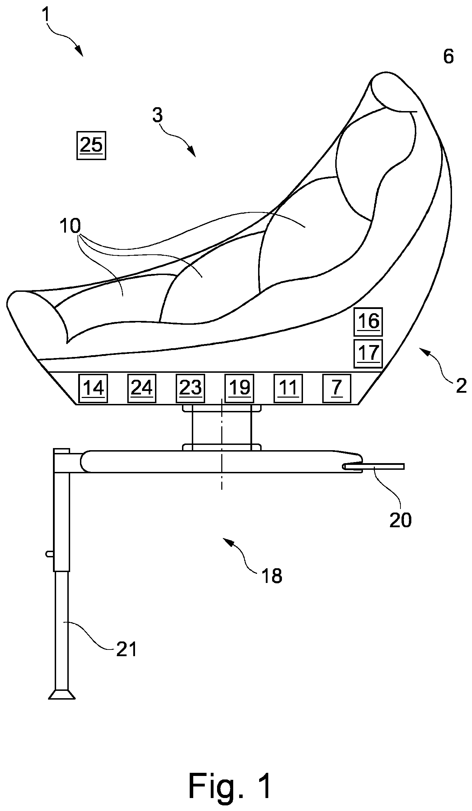

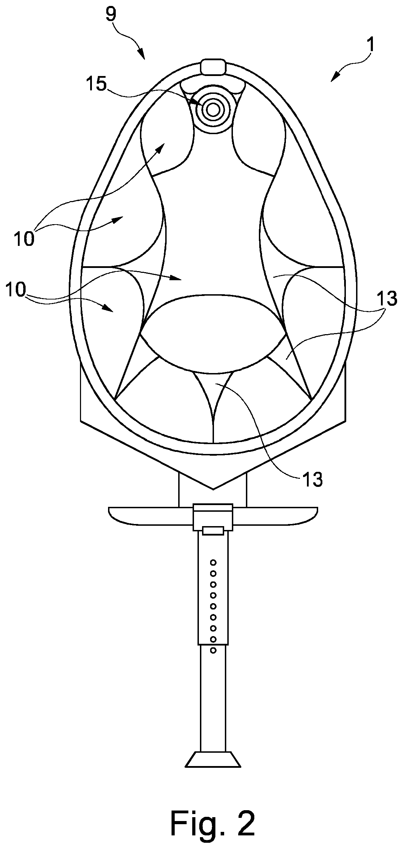

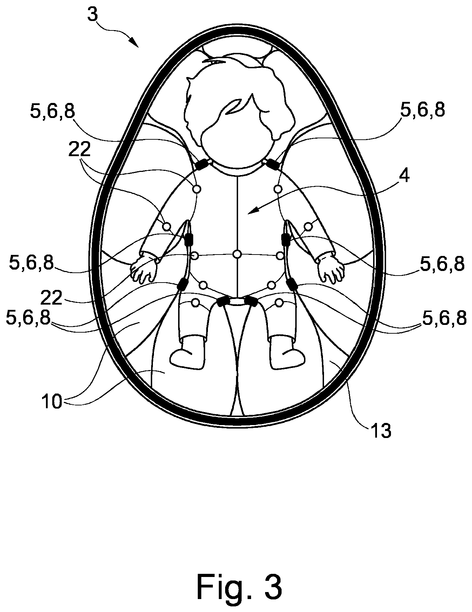

Die in den Fig. 1 bis 3 dargestellte Fahrzeugrückhaltevorrichtung 1 umfasst eine erste Gehäusekomponente 2, die als äußerer Teil der Fahrzeugrückhaltevorrichtung 1 ausgeführt ist, und eine zweite Gehäusekomponente 3, die als innerer Teil gestaltet ist und zur direkten Aufnahme eines Kindes dient, siehe Fig. 3. Die zweite Gehäusekomponente 3 ist in oder an der ersten Gehäusekomponente 2 befestigt und insbesondere relativ dazu beweglich gelagert und bildet das Innenträgersystem für das Kind. Fahrzeugrückhaltevorrichtung 1 kann Ei- oder Kokonförmig ausgeführt sein, siehe Fig. 2 und 3.

Lösbar verbindbar ist mit der zweiten Gehäusekomponente 3 eine Rückhaltebekleidung 4 (siehe Fig. 3) vorgesehen, die vom Kind körpernah getragen wird. Die Rückhaltebekleidung 4 liegt flächig am Körper des Kindes an und ist beispielsweise als Ganzkörperanzug ausgebildet. In der Ausführungsform gemäß Fig. 3 umschließt die Rückhaltebekleidung 4 (nahezu) den Rumpf und die äußeren Gliedmaßen des Kindes, ist also als Strampler ausgeführt. Alternativ könnte die Rückhaltebekleidung 4 als Weste ausgeführt sein, die lediglich den (gesamten) Rumpf oder nur einen Teil des Rumpfes, mit oder ohne die äußeren Gliedmaßen des Kindes teilweise oder vollständig umgibt.

Die Rückhaltebekleidung 4 ist mit mehreren, gemäß der Ausführungsform nach Fig. 3 mit insgesamt acht Fixierungspunkten 5 mit der Fahrzeugrückhaltevorrichtung 1 lösbar verbunden. Die Fixierungspunkte 5 sind gleichmäßig über die Rückhaltebekleidung 4 verteilt und jeweils mit Schnellverschlüssen 6 ausgestattet, die wahlweise als Clips oder magnetisch rastende Schnallen ausgeführt sind. Die Fixierungspunkte 5 und die Schnellverschlüsse 6 können an der Außenbegrenzung des Rumpfes des Kindes, wenn es in der Fahrzeugrückhaltevorrichtung 1 Platz genommen hat, also am Übergang zum Kopf (Hals-Schulterbereich), am Übergang zu den Armen (im Bereich der Achseln) und Beinen (im Bereich der Hüfte und der Oberschenkel) sowie am Rumpf selber, z.B. oberhalb der Hüfte angeordnet sein. Diese Anordnung sorgt für eine optimale Kraftübertragung vom Kind über die Rückhaltebekleidung 4 auf die Fahrzeugrückhaltevorrichtung 1, verteilt also die wirkenden Trägheitskräfte für eine besonders geringe Beanspruchung des kindlichen Körpers bei abrupten Beschleunigungs- oder Verzögerungsvorgängen, wie insbesondere abprupten Bremsungen. Die Schnellverschlüsse 6 erlauben ein einfaches Lösen und Befestigen der Rückhaltebekleidung 4 an der Vorrichtung.

In der Fahrzeugrückhaltevorrichtung 1 ist ein Auto-Tightening-System 7 (siehe Fig. 1) integriert, das mit den Fixierungspunkten 5 verbunden ist. Jedem Fixierungspunkt 5 ist ein Aktuator 8 (in Fig. 3 angedeutet) zugeordnet, der die Rückhaltekraft automatisch anpasst. Das System verteilt den Druck gleichmäßig über alle Fixierungspunkte 5, wodurch eine sichere und zugleich komfortable Halterung gewährleistet wird.

Die zweite Gehäusekomponente 3 umfasst ein elastisch verformbares Element in Form eines Luftkissensystems 9, siehe Fig. 2. Dieses umfasst mehrere z.B. aus TPU hergestellte Luftkissen 10, die in unterschiedlichen Segmenten angeordnet sind und sich individuell an die Körperform des Kindes anpassen. Die Luftkissen 10 sind über eine Pumpe 11 befüllbar, welche sich in der ersten Gehäusekomponente 2 befindet. Jedem Luftkissen 10 ist ein Ablassventil (nicht dargestellt) zur kontrollierten Entlüftung zugeordnet.

Die Luftkissen 10 sind dabei derart angeordnet, dass sie den Rumpf und/oder die Außenkontur des Kindes stützen. Insbesondere können in der Mitte der zweiten Gehäusekomponente 3 ein oder zwei Luftkissen 10 angeordnet sein, die den Rumpf des Kindes stützen sollen. Um die Mitte herum, also um den Kindskörper herum können dann weitere Luftkissen 10 verteilt angeordnet sein. Dabei ist der Füllungsgrad der einzelnen Luftkissen 10 mittels der Pumpe 11 und der jedem Luftkissen 10 zugeordneten Ablassventile einstellbar. Und zwar so, dass hierdurch eine Sitzposition, durch selektives Aufpumpen der unterhalb des Rückens oder Rumpfes des Kindes angeordneten Luftkissen 10 und eine Liegeposition durch gleichmäßiges Auf- oder Abpumpen aller (oder nur der mittleren) Luftkissen 10, also durch für jedes Luftkissen 10 getrenntes Einstellen des Füllungsgrads realisierbar ist.

Dabei kann jedes der Luftkissen 10 über eine separate Zuleitung für die Luft mit der Pumpe 11 verbunden oder verbindbar sein (nicht gezeigt). In der jeweiligen Zuleitung kann ein ebenfalls nicht dargestelltes Wegeventil vorgesehen sein, um den Strömungsquerschnitt für Luft zu dem Luftkissen einzustellen. Die Pumpe 11, die Wegeventile und die Ablassventile können in Kommunikationsverbindung mit einer zentrale Steuereinheit 24 (siehe Fig. 1) stehen, um diese anzusprechen. Somit kann die zentrale Steuereinheit 24 einzeln den Füllungsgrad jedes Luftkissens 10 separat steuern.

Die Luftkissen 10 sind in der zweiten Gehäusekomponente 3 so angeordnet, dass zwischen ihnen Kanäle 13 verbleiben, siehe Fig. 2. Diese Kanäle 13 können dazu dienen, dass durch sie bzw. zwischen den Luftkissen 10 hindurch konditionierte Luft einer Klimaeinheit 14 (siehe Fig. 1) strömen kann. Die Klimaeinheit 14 umfasst ein Gebläse sowie eine Kühl- und Heizeinheit.

Wie man besonders gut in der Fig. 2 erkennt, ist zwischen den Luftkissen 10 im Bereich der der zweiten Gehäusekomponente 3, die den Kopf des Kindes aufnimmt, eine Kopfstütze 15 vorgesehen. Diese kann aus ineinander konzentrisch angeordneten Kreisen eines vergleichsweise elastischen oder weichen Materials ausgeführt sein, um den Kopf des Kindes sicher und bequem zu tragen.

Ein gyroskopischer Stabilisator 16 (siehe Fig. 1) ist zwischen der ersten und zweiten Gehäusekomponente 2, 3 angeordnet. Dieser kompensiert Fahrzeugbewegungen durch Relativverschiebung zwischen der ersten und zweiten Gehäusekomponente 2, 3. So kann der gyroskopischer Stabilisator 16 abrupte Verzögerungs- oder Beschleunigungsbewegung des Fahrzeugs durch eine diese kompensierende Relativbewegung zwischen der ersten und der zweiten Gehäusekomponente 2, 3 ausgleichen. Man könnte auch sagen, dass dieser gewisse Beschleunigungs- oder Verzögerungsspitzen kompensiert und diese nicht vom Fahrzeug über die erste Gehäusekomponente 2 auf die zweite Gehäusekomponente 3 überträgt. Die das Kind enthaltende zweite Gehäusekomponente 3 gleicht die Fahrbewegungen des Fahrzeugs aus, indem sie sich relativ zur ersten Gehäusekomponente 2 entsprechend bewegt. Damit wird der Körper des Kinds vor zu hohen Beschleunigungen bzw. Verzögerungen geschont. Bei Systemausfall, insbesondere einer Unterbrechung der Stromzufuhr zum gyroskopischen Stabilisator sorgt ein Verriegelungsmechanismus 17 dafür, dass beide Gehäusekomponenten starr miteinander verbunden bleiben. Der gyroskopische Stabilisator 16 wird beim Systemausfall mechanisch über den Verriegelungsmechanismus 17 umgangen.

Wie Fig. 1 weiter verdeutlicht, ist die Fahrzeugrückhaltevorrichtung 1 lösbar auf einer Basis 18 befestigt. Die Basis 18 ermöglicht eine vollständige 360-Grad-Drehung der Fahrzeugrückhaltevorrichtung 1 relativ dazu um im Wesentlichen eine Vertikale 26. Ein Verriegelungssystem 19 sorgt dafür, dass die Fahrzeugrückhaltevorrichtung 1 in verschiedenen Drehpositionen fixierbar ist.

Die Basis 18 umfasst zudem eine Isofix-Aufnahme 20 sowie ein Stützbein 21, welches sich im Fußraum des Fahrzeugs abstützt. Die Basis 18 ist unabhängig von der gezeigten Ausführungsform dazu vorgehen, auf einen Sitz des Fahrzeugs aufgesetzt und mittels der Isofix-Aufnahme 20 am Fahrzeug lösbar befestigt zu werden.

In oder an der Rückhaltebekleidung 4 bzw. im Bereich der Luftkissen 10 sind mehrere Sensoren 22 (siehe Fig. 3) integriert, die Vital- und Bewegungsparameter des Kindes wie Herzfrequenz, Temperatur, Muskelaktivität und Körperpositionierung erfassen. Diese Daten werden an ein Kl-gestütztes Auswertungssystem 23 übermittelt, das die zentrale Steuereinheit 24 mit Informationen versorgt.

Die zentrale Steuereinheit 24 ist, wie in Fig. 1 dargestellt, in der ersten Gehäusekomponente 2 untergebracht und steuert die Pumpe 11, die Aktuatoren 8 des Auto-Tightening-Systems 7, die Klimaeinheit 14, den gyroskopischen Stabilisator 16 sowie das Auswertungssystem 23. Über eine digitale Anzeige- und Steuerungsschnittstelle 25, welche als Touch- und Sprachsteuerung ausgebildet ist, kann die Fahrzeugrückhaltevorrichtung 1 benutzerindividuell angepasst werden. Die Anzeige- und Steuerungsschnittstelle 25 kann Teil der Fahrzeugrückhaltevorrichtung 1 sein oder aber, wie in Fig. 1 gezeigt, separat von dieser ausgeführt sein. Sie ist zusätzlich über drahtlose Kommunikation beispielsweise über eine mobile App mit mobilen Geräten, wie einem Smartphone, beispielsweise des Fahrers oder Beifahrers koppelbar.

Sobald die Basis 18 im Fahrzeug auf einem Sitz aufgesetzt und mittels der Isofix-Aufnahme 20 am Fahrzeug befestigt wurde, kann die Fahrzeugrückhaltevorrichtung 1 auf die Basis 18 aufgesetzt werden. Dann wird das Kind zunächst in die Rückhaltebekleidung 4 gekleidet. Letztere verbleibt vorzugsweise auch beim Verlassen des Fahrzeugs am Körper des Kindes. Anschließend wird die Rückhaltebekleidung 4 mittels der Schnellverschlüsse 6 an den Fixierungspunkten 5 mit der Fahrzeugrückhaltevorrichtung 1 verbunden. Das Auto-Tightening-System 7 passt automatisch die Haltekräfte an den Fixierungspunkten 5 über die Aktuatoren 8 an, wobei eine gleichmäßige Druckverteilung über diese erreicht wird. Parallel dazu erfolgt die individuelle Einstellung der Luftkissen 10 zur Unterstützung der Körperform und Körperhaltung des Kindes. Der gyroskopische Stabilisator 16 gleicht während der Fahrt etwaige Bewegungen des Fahrzeugs aktiv aus. Die Sensoren 22 überwachen kontinuierlich Vitalparameter des Kindes und melden etwaige Auffälligkeiten über die digitale Anzeigeeinheit 25 sowie verbundene mobile Endgeräte.

Durch die strukturierte und modulare Bauweise mit individuell anpassbarer Rückhaltebekleidung 4, intelligenter Kraftverteilung durch das Auto-Tightening-System 7, dem komfortablem Luftkissenlager 9 sowie aktiver gyroskopischer Stabilisierung 16 wird ein besonders hohes Maß an Sicherheit und Komfort gewährleistet. Die integrierte Sensorik und intelligente Steuerung steigern die Überwachung und Reaktionsfähigkeit gegenüber Gefährdungen erheblich. Die 360-Grad-Drehbarkeit der Fahrzeugrückhaltevorrichtung 1 erleichtert Eltern oder Pflegepersonal das Handling wesentlich. Zudem ermöglichen nachhaltige Materialien und modulare Komponenten eine ressourcenschonende Nutzung.

Die Fahrzeugrückhaltevorrichtung 1 ist in modularer Bauweise ausgeführt und verwendet gezielt recycelbare sowie umweltfreundliche Materialien, um eine nachhaltige Herstellung, Nutzung und Entsorgung zu gewährleisten. Dabei ist das Design so ausgelegt, dass einzelne Komponenten bei Verschleiß oder zur funktionalen Aufrüstung leicht austauschbar sind, ohne dass die gesamte Vorrichtung ersetzt werden muss. Dies fördert nicht nur die Langlebigkeit des Produkts, sondern reduziert auch die Umweltbelastung.

Für die Herstellung der tragenden Struktur, insbesondere der ersten Gehäusekomponente 2, kann eine AZ91D-Magnesiumlegierung verwendet werden, die durch eingebrachte Kevlar-Verstärkungen eine hohe Festigkeit bei gleichzeitig geringem Gewicht bietet. Die Außenschale, also die erste Gehäusekomponente 2 kann aus einem Graphen (z.B. Carbon-Nanotubes) verstärkten Verbundwerkstoff hergestellt sein, der für eine ultraleichte und gleichzeitig sehr belastbare Außenhülle sorgt. Der Sitzrahmen sowie tragende Stützelemente innerhalb der zweiten Gehäusekomponente 3 bestehen aus Fiberglas in Kombination mit thermoplastischen Elastomeren (TPE), die eine gute Stoßdämpfung und Formbeständigkeit bieten.

Die Rückhaltebekleidung 4 kann aus einem Nano-Verbundmaterial gefertigt sein, das mit viskoelastischem Memory-Schaum gepolstert ist. Diese Materialien ermöglichen eine ergonomische Anpassung an die Körperform des Kindes bei gleichzeitig hoher Rückstellkraft. Die in die Rückhaltebekleidung 4 integrierten Komponenten zur zusätzlichen Stoßdämpfung bestehen aus mit Titan angereicherten Polymeren.

Das Luftkissensystem 9 kann aus mehrschichtigen Blasen aus thermoplastischem Polyurethan (TPU) hergestellt sein, die hohe Elastizität und Beständigkeit gegenüber Druckbelastungen aufweisen. Die TPU-Komponenten sind ebenfalls vollständig recycelbar.

Die Gehäuse der elektronischen Komponenten wie Pumpe 11, zentrale Steuereinheit 24 und digitale Anzeigeeinheit 25 können aus stoßfestem Kohlefaserverbundmaterial bestehen. Für die mechanischen Schnellverschlüsse 6 und ISOFIX-Verankerungen wird hochfester Edelstahl verwendet.

Zur weiteren Reduzierung des ökologischen Fußabdrucks sind einzelne Teile der Fahrzeugrückhaltevorrichtung 1, insbesondere nicht sicherheitskritische Abdeckungen und Halteelemente, durch additive Fertigung (3D-Druck) aus biobasierten Kunststoffen hergestellt. Dies erhöht die Fertigungspräzision und reduziert Materialabfälle während der Produktion.

Ergänzend unterstützt ein Rückkauf- und Recyclingprogramm den nachhaltigen Produktlebenszyklus, indem gebrauchte Komponenten fachgerecht recycelt oder generalüberholt und wiederverwendet werden können.

Insgesamt trägt dieser material- und konstruktionsseitige Aufbau entscheidend zur Erfüllung der Nachhaltigkeitsziele der Erfindung bei und unterstreicht ihren modularen und zukunftsfähigen Charakter.

## Patentansprüche

1. Fahrzeugrückhaltevorrichtung (1), wie Kleinkindersitz oder Babyschale, zur Verwendung in einem Fahrzeug für ein Kind, insbesondere ein Kleinkind oder einen Säugling, wobei das Kind mittels einer körpernah getragenen Rückhaltebekleidung (4) lösbar mit der Fahrzeugrückhaltevorrichtung (1) fixierbar ist, wobei die Rückhaltebekleidung (4) vom Kind tragbar ausgebildet ist, sich um zumindest einen Teil des Körpers des Kindes legt und nach dem Anlegen flächig an diesem anliegt, wobei die Rückhaltebekleidung (4) mit mehreren, mindestens fünf, bevorzugt sechs, insbesondere mehr als sechs, bevorzugt acht Fixierungspunkten (5) mit der Fahrzeugrückhaltevorrichtung (1) lösbar verbindbar ist, wobei die Rückhaltebekleidung (4) insbesondere in Form eines Ganzkörperanzugs, wie eines Stramplers, oder einer Weste, ausgebildet ist.

2. Fahrzeugrückhaltevorrichtung (1) nach einem der vorhergehenden Ansprüche, **dadurch gekennzeichnet, dass** die Fahrzeugrückhaltevorrichtung (1) eine erste Gehäusekomponente (2, 3) umfasst, welche als äußerer Teil der Fahrzeugrückhaltevorrichtung (1) ausgestaltet ist, und eine zweite Gehäusekomponente (2, 3), welche als innerer Teil der Fahrzeugrückhaltevorrichtung (1) ausgestaltet ist und zur Aufnahme des Kindes dient.

3. Fahrzeugrückhaltevorrichtung (1) nach einem der vorhergehenden Ansprüche, **dadurch gekennzeichnet, dass** die Rückhaltebekleidung (4) lösbar mit der inneren oder äußeren Gehäusekomponente (2, 3) verbindbar ist, sodass sie vom Kind getrennt an- oder ausziehbar ist und bevorzugt beim Verlassen der Fahrzeugrückhaltevorrichtung (1) am Körper des Kindes verbleibt.

4. Fahrzeugrückhaltevorrichtung (1) nach einem der vorhergehenden Ansprüche, **dadurch gekennzeichnet, dass** die Rückhaltebekleidung (4) Rückhalteelemente aufweist, die bevorzugt starr oder halbstarr ausgebildet sind und entweder nur einen Teilbereich des Körpers, bevorzugt den Rumpf, einen Teil des Rumpfes oder den gesamten Rumpf samt äußerer Gliedmaßen des Kindes teilweise oder vollständig umfassen.

5. Fahrzeugrückhaltevorrichtung (1) nach einem der vorhergehenden Ansprüche, **dadurch gekennzeichnet, dass** die Fixierungspunkte (5) der Rückhaltebekleidung (4) mit einem Auto-Tightening-System (7) verbunden sind, das mittels wenigstens eines dem jeweiligen Fixierungspunkt (5) zugeordneten Aktuators (8) eine insbesondere automatische Rückhaltekrafteinstellung durchführt, wobei das Auto-Tightening-System (7) den Druck gleichmäßig über die Fixierungspunkte (5) verteilt.

6. Fahrzeugrückhaltevorrichtung (1) nach einem der vorhergehenden Ansprüche, **dadurch gekennzeichnet, dass** die Rückhaltebekleidung (4) mit Schnellverschlüssen (6) versehen ist, die eine lösbare Verbindung mit der zweiten Gehäusekomponente (2, 3) und insbesondere mit den Fixierungspunkten (5) der Fahrzeugrückhaltevorrichtung (1) ermöglichen, wobei die Schnellverschlüsse (6) als Clips oder Schnallen ausgeführt und mechanisch rastend oder magnetisch ausgebildet sind.

7. Fahrzeugrückhaltevorrichtung (1) nach einem der vorhergehenden Ansprüche, **dadurch gekennzeichnet, dass** die zweite Gehäusekomponente (2, 3) ein elastisch verformbares Element aufweist, das mit einem Gas, insbesondere Luft, füll- und entleerbar ist und dazu dient, das Kind darauf, insbesondere luftgestützt aufzunehmen, wobei das elastisch verformbare Element bevorzugt als mehrschichtiges oder mehrteiliges Luftkissen (10) mit insbesondere thermoplastischen Polyurethan (TPU)-Blasen ausgebildet ist, wobei die einzeln Luftkissen (10) an die Körperform des Kindes durch mehr oder minderes Befüllen mit Gas anpassbar sind, und wobei eine Pumpe (11) vorgesehen ist, die bevorzugt in der ersten Gehäusekomponente (2, 3), also im äußeren Teil der Fahrzeugrückhaltevorrichtung (1), untergebracht ist, um den Füllungsgrad der einzelnen Luftkissen (10) einzustellen, wobei jedem einzelnen Luftkissen (10) bevorzugt ein Ablassventil zur kontrollierten Entlüftung zugeordnet ist, wobei bevorzugt die Fixierungspunkte zwischen einander benachbart angeordneten Luftkissen (10) angeordnet sind.

8. Fahrzeugrückhaltevorrichtung (1) nach Anspruch 7, **dadurch gekennzeichnet, dass** die Luftkissen (10) derart angeordnet sind, dass sie den Rumpf und/oder die Außenkontur des Kindes stützen, wobei der Füllungsgrad der einzelnen Luftkissen (10) derart einstellbar ist, dass hierdurch eine Sitzposition, durch selektives Aufpumpen der unterhalb des Rückens des Kindes angeordneten Luftkissen (10) und eine Liegeposition durch gleichmäßiges Auf- oder Abpumpen aller Luftkissen (10), also durch für jedes Luftkissen (10) getrenntes Einstellen des Füllungsgrads realisierbar ist.

9. Fahrzeugrückhaltevorrichtung (1) nach einem der vorhergehenden Ansprüche, **dadurch gekennzeichnet, dass** zwischen der ersten und der zweiten Gehäusekomponente (2, 3) wenigstens ein gyroskopischer Stabilisator (8) angeordnet ist, welcher Bewegungen des Fahrzeugs detektiert und/oder ausgleicht, wobei der gyroskopische Stabilisator (8) derart eingerichtet ist, dass insbesondere eine abrupte Verzögerungs- oder Beschleunigungsbewegung des Fahrzeugs durch eine diese kompensierende Relativbewegung zwischen der ersten und der zweiten Gehäusekomponente (2, 3) erfolgt, wobei dem gyroskopische Stabilisator (8) bevorzugt ein Verriegelungsmechanismus (17) zugeordnet ist, welcher bei Systemausfall, insbesondere einer Unterbrechung der Stromzufuhr zum gyroskopischen Stabilisator (8), eine Fixierung der Fahrzeugrückhaltevorrichtung (1) in einer Position ermöglicht, in der die erste und die zweite Gehäusekomponente (2, 3) unter Umgehung des gyroskopischen Stabilisators (8) starr miteinander koppelbar sind.

10. Fahrzeugrückhaltevorrichtung (1) nach einem der vorhergehenden Ansprüche, **dadurch gekennzeichnet, dass** die Fahrzeugrückhaltevorrichtung (1) lösbar an einer Basis (18) befestigbar ist und eine Drehvorrichtung umfasst, die derart eingerichtet ist, dass sich die Fahrzeugrückhaltevorrichtung (1) um die Basis (18) herum um 360 Grad - in Bezug auf eine im Wesentlichen Vertikale auf die Basis (18) gesehen - drehen lässt, wobei bevorzugt die Drehvorrichtung mit einem Verriegelungssystem ausgebildet ist, das eine Fixierung der Fahrzeugrückhaltevorrichtung (1) in verschiedenen Positionen ermöglicht, wobei bevorzugt die Basis (18) eine Aufnahme für eine Isofix-Verankerung (20) in dem Fahrzeug und ein Stützbein (21) zum Abstützen der Basis (18) im Fußraum des Fahrzeugs umfasst.

11. Fahrzeugrückhaltevorrichtung (1) nach einem der vorhergehenden Ansprüche, **dadurch gekennzeichnet, dass** Sensoren (22) vorgesehen sind, welche mindestens eine der folgenden Vital- oder Bewegungsparameter des Kindes erfassen: Herzfrequenz, Temperatur, Muskelaktivität und Körperpositionierung, wobei die Sensoren bevorzugt in oder auf den Luftkissen (10) ein- oder aufgebracht sind und bevorzugt Teil eines Kl-gestützten Auswertungssystems sind, das unsichere Körperhaltungen, abnorme Vitalfunktionen sowie plötzliche Bewegungen oder Stresszustände erkennt und entsprechende Warnmeldungen generiert, wobei die Sensoren bevorzugt in oder an der Rückhaltebekleidung (4) angeordnet sind.

12. Fahrzeugrückhaltevorrichtung (1) nach einem der vorhergehenden Ansprüche, **dadurch gekennzeichnet, dass** eine digitale Anzeige- und Steuerungsschnittstelle (25) vorgesehen ist, welche Touchscreen- und Sprachsteuerung kombiniert und mit einem Smartphone oder Infotainmentsystem des Fahrzeugs gekoppelt werden kann, wobei bevorzugt mittels der digitale Anzeige- und Steuerungsschnittstelle (25) oder einer mit dieser koppelbaren mobilen Applikation benutzerdefinierte Einstellungen vorgenommen, Nutzungsdaten verfolgt und mehrere Benutzerprofile mit adaptiven Voreinstellungen verwaltet werden können.

13. Fahrzeugrückhaltevorrichtung (1) nach einem der vorhergehenden Ansprüche, **dadurch gekennzeichnet, dass** eine Klimaeinheit (14) vorgesehen ist, welche ein Gebläse und eine Kühl- und/oder Wärmeinheit, wie eine Wärmepumpe umfasst, um die durch die Fahrzeugrückhaltevorrichtung (1) strömende Luft gezielt zu konditionierten, insbesondere zu kühlen oder zu erwärmen, wobei bevorzugt die Luftkissen (10) derart mit Abstand zueinander angeordnet sind, sodass die Zwischenräume zwischen den einander benachbarten Luftkissen (10) als Ausströmkanäle der Klimaeinheit (14) dienen, durch welche die konditionierte Luft ausströmen kann, wobei bevorzugt die Klimaeinheit (14) zusätzlich Phasenwechselmaterialien (PCM) zur passiven Temperaturregelung sowie mindestens einen Infrarot-Temperatursensor zur Überwachung und Regelung der Temperatur umfasst.

14. Fahrzeugrückhaltevorrichtung (1) nach einem der vorhergehenden Ansprüche, **dadurch gekennzeichnet, dass** eine zentrale Steuereinheit (24) vorgesehen ist, die mit folgenden Elementen verbunden oder verbindbar ist:
a) der digitalen Anzeige- und Steuerungsschnittstelle nach Anspruch 12,
b) dem Kl-gestützten Auswertungssystem nach Anspruch 11,
c) einem RFID-basierten oder biometrischen Zugangssystem zur Autorisierung der Nutzung,
d) den dem jeweiligen Fixierungspunkt zugeordneten Aktuatoren (8) des Auto-Tightening-Systems (7) nach Anspruch 5,
e) dem gyroskopischen Stabilisator (8) nach Anspruch 9,
f) der in der ersten Gehäusekomponente (2, 3) untergebrachten Pumpe (11) nach Anspruch 7,
g) der Klimaeinheit (14) nach Anspruch 13,
wobei bevorzugt alle genannten Elemente, insbesondere samt der zentralen Steuereinheit (24) in der ersten Gehäusekomponente (2, 3), also im äußeren Teil der Fahrzeugrückhaltevorrichtung (1), untergebracht sind oder dort angeordnet sein können.

15. Fahrzeug, wie Kraftfahrzeug, Luftfahrzeug, schienen- oder nicht-schienengebunden Landfahrzeug, umfassend eine Fahrzeugrückhaltevorrichtung (1) nach einem der vorhergehenden Ansprüche.
